**Europäisches Patentamt**

**European Patent Office**

**Office européen des brevets**

(11) Numéro de publication : **0 438 532 B1**

(12)

# FASCICULE DE BREVET EUROPEEN

(45) Date de publication du fascicule du brevet :
**17.03.93 Bulletin 93/11**

(51) Int. Cl.$^5$ : **B32B 27/32, D06N 3/04**

(21) Numéro de dépôt : **89913087.6**

(22) Date de dépôt : **04.12.89**

(86) Numéro de dépôt international :
**PCT/BE89/00050**

(87) Numéro de publication internationale :
**WO 90/06233 14.06.90 Gazette 90/14**

(54) PROCEDE DE PRODUCTION DE REVETEMENTS DE SOLS OU DE MURS ET PRODUITS OBTENUS.

(30) Priorité : **06.12.88 LU 87402**

(43) Date de publication de la demande :
**31.07.91 Bulletin 91/31**

(45) Mention de la délivrance du brevet :
**17.03.93 Bulletin 93/11**

(84) Etats contractants désignés :
**AT BE CH DE ES FR GB IT LI LU NL SE**

(56) Documents cités :
**EP-A- 0 248 750**
**FR-A- 2 322 737**
**GB-A- 1 199 050**
**GB-A- 1 268 823**
**GB-A- 1 384 556**

(73) Titulaire : **EUROFLOOR S.A.**
**1 Rue Neuve**
**L-9501 Wiltz (LU)**

(72) Inventeur : **MARCHAL, Daniel**
**17, rue Jean Melsen**
**L-9142 Burden (LU)**
Inventeur : **VIET DAO, Dung**
**18, Trixhe aux Minières**
**B-4070 Aywaille (BE)**

(74) Mandataire : **Van Malderen, Michel et al**
**p.a. Office van Malderen 85/043 Boulevard de**
**la Sauvenière**
**B-4000 Liège (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

### Objet de l'invention

La présente invention concerne des revêtements de sols et de murs présentant des propriétés améliorées, en particulier pour ce qui se rapporte à leur comportement au feu et les risques qu'ils présentent de dégager des fumées toxiques lors de leur combustion aussi bien lors d'un incendie accidentel que lors de leur incinération volontaire.

Elle a également pour objet le procédé de production de tels produits.

### Problèmes auxquels s'adresse l'invention

Les produits de revêtements de sols ou de murs font largement appel à des compositions polymériques dérivées de chlorure de vinyle ou de composés contenant de l'azote tels que les polyuréthanes, les polyamides etc.

La combustion accidentelle de tels produits au cours d'un incendie provoque d'importants dégagements gazeux, notamment chlorés (essentiellement constitués de HCl). Ceux-ci sont la cause primaire de nombreux décès lors d'incendies ou d'atteintes invalidantes aussi bien pour les victimes que pour le personnel d'intervention.

Le traitement des déchets par incinération volontaire entraîne également une pollution non négligeable, en dépit des précautions qui peuvent être prises telles que le tri préalable.

L'utilisation de filtres ou d'autres dispositifs entraîne de toute façon un accroissement prohibitif des coûts de traitement des immondices, sans résoudre tous les problèmes de pollution.

Les combustions volontaires ou accidentelles de dépôts d'immondices entraînent un dégagement d'agents toxiques gazeux, en général plus important que celui d'un traitement de ces mêmes déchets par incinération à cause du caractère incontrôlé de la combustion qui de plus est généralement incomplète.

Il existe donc un besoin urgent de disposer d'une technique de réalisation de produits de revêtement de sols ou de murs présentant moins d'inconvénients que ceux existants.

Dans la demande de brevet EP-A2-0 274 115, on décrit l'impact sur l'environnement de produits de revêtement de sols et de murs. La solution proposée repose sur l'utilisation d'une matière fondue comportant des matières minérales, homogène ou déposée sur une sous-couche de non-tissé de fibre de verre. Après impression, ce produit peut recevoir un vernis de finition.

Les possibilités décoratives sont bien entendu forcément limitées et le comportement physique des produits, en particulier leur résistance mécanique n'est pas nécessairement assuré dans tous les cas.

### Buts de l'invention

La présente invention vise à obtenir un produit de revêtement de sols ou de murs de type nouveau qui se distingue des produits obtenus par des procédés essentiellement techniques au sens large tels que les tapis tissés ou tuftés ou en matériaux dits non-tissés et qui évite le recours à des polymères susceptibles de dégager des composés chlorés ou azotés.

Elle vise à apporter également des perfectionnements aux propriétés des produits obtenus et à leurs conditions de production.

### Exposé de la technique de l'invention

Jusqu'à présent, la technique de production de revêtement de sols ou de murs par voie non textile a largement fait appel au PVC, par suite des larges facilités de mise en oeuvre de ce produit par diverses techniques, en particulier par enduction d'un plastisol sur une sous-couche de fibres de verre ou autre.

Le brevet GB-A-1 199 050 décrit des matériaux pour revêtement de sols munis d'une couche pouvant être à base de polypropylène, contenant des charges, un plastifiant et des pigments et appliqués par enduction afin de fournir à ce revêtement de sol des propriétés améliorées d'adhérence et d'amortissement phonique et/ou thermique.

Dans le brevet GB-A-1 268 823, on a décrit un papier synthétique constitué de deux couches à base de polypropylène et destiné pour la frappe à la machine à écrire, pour l'impression, pour l'emballage et comme matériau décoratif. En vue de lui conférer un aspect et un toucher similaire à celui du papier ordinaire, le film extérieur reçoit une charge et des "micro-vides".

Le brevet FR-A-2 322 737 suggère de recouvrir un support de papier, d'un film protecteur (pouvant être notamment de polypropylène), au moyen d'une couche adhésive. Avant le processus de superposition, le film est muni d'une image imprimée.

Il convient de garder à l'esprit à cet égard que les utilisateurs se montrent particulièrement exigeants aussi bien pour ce qui concerne les propriétés physiques d'usage des produits (résistance à l'usure et résistance aux taches) qu'à l'aspect décoratif du produit (reproduction des motifs naturels ou non, brillance, relief ou structure, etc.).

La technique utilisée doit donc permettre d'obtenir également par impression l'effet décoratif souhaité tout en assurant un comportement convenable à l'usage.

Il est apparu que ces exigences peuvent être satisfaites par une technique comportant l'application au moins d'une feuille supérieure sur une feuille inférieure chargée et flexibilisée, un décor étant interposé entre lesdites couches et l'ensemble étant constitué essentiellement d'une matière dérivée d'un polymère de propylène.

Par "essentiellement constituée d'une matière dérivée d'un polymère de propylène", on entend une matière dont la quantité de constituants propyléniques dans le mélange de polymères et/ou dans le copolymère est supérieure à 50%.

Pour obtenir les effets décoratifs optiques souhaités, il est avantageux et généralement prévu selon l'invention d'intercaler entre les deux feuilles précitées au moins une couche intermédiaire éventuellement pigmentée dans la masse et/ou éventuellement pourvue d'un décor, essentiellement dérivée également d'un polymère de propylène.

La référence à une couche supérieure et inférieure et le cas échéant à une couche intermédiaire se rapporte bien entendu au produit tel qu'il est prévu lors de la pose sur le sol ou sur le mur.

Selon l'invention, le décor peut être obtenu selon l'un au moins des procédés choisis parmi:

- le grainage et/ou le gaufrage mécanique;
- l'impression, de préférence l'impression sur la face interne de la feuille supérieure et/ou sur la face interne de la feuille inférieure et/ou éventuellement sur la feuille intermédiaire;
- l'inclusion de matières solides;
- le dépôt de poudres;
- l'utilisation au moins localisée de matières moussables colorées ou non;
- et d'autres procédés classiques connus en soi dans la technique de réalisation de revêtements de sols ou de murs.

De manière générale, l'invention couvre toute application de décor dérivée des techniques analogues utilisées pour les revêtements de sols et/ou de murs, constitués essentiellement de PVC.

Les couches inférieures et supérieures et éventuellement la ou les couches intermédiaires sont avantageusement obtenues par calandrage ou par extrusion. En outre, l'application de la feuille supérieure et éventuellement de la feuille intermédiaire s'effectue avantageusement par les techniques de doublage ou de coextrusion. Si toutefois, la couche supérieure était constituée d'un vernis de finition (couche d'usure) recouvrant un décor par exemple, cette couche supérieure peut être appliquée par d'autres techniques, notamment par enduction.

Les agents de charge et de flexibilisation ajoutés dans la matière de départ pour obtenir les différentes couches sont bien entendu choisies de manière à ne pas être par eux-mêmes la cause de dégagements gazeux chlorés ou azotés importants en cas de combustion.

Pour les diverses couches, l'utilisation de copolymères statistiques du propylène est particulièrement avantageuse. Ceux-ci comportent bien entendu les adjuvants habituels de stabilisation thermique et à la lumière ainsi que les agents de processabilité.

Préalablement au calandrage par exemple, on peut appliquer sur le verso de la couche supérieure tout motif approprié par des techniques classiques d'impression en vigueur dans la technique de réalisation de revêtements de sols et de murs. Conviennent tout particulièrement l'héliogravure ou la quadrichromie. On constate qu'une telle impression n'influence pas le doublage ultérieur. La feuille supérieure est bien entendu choisie de manière à être au moins translucide et de préférence transparente de manière que le motif décoratif soit visible. Une feuille supérieure du type décrit, à savoir à base de polymères du propylène et tout particulièrement d'un copolymère statistique du propylène présente un excellent comportement à l'usage. Sa résistance à l'usure et ses propriétés de glissance sont satisfaisantes. Les caractéristiques de résistance aux taches sont excellentes. L'emploi de composés permettant d'encore optimaliser ces propriétés relève bien entendu de l'invention à titre complémentaire éventuel.

Les polymères mis en oeuvre pour la réalisation de la couche "supérieure" ne conviennent cependant pas tels quels pour la couche dite "inférieure" par suite d'un comportement non satisfaisant lors de l'enroulage et de la pose. Il est apparu, selon une caractéristique subsidiaire importante de l'invention, qu'il convient d'ajouter à la matière destinée à la réalisation de cette feuille inférieure, des adjuvants flexibilisants afin d'en réduire la rigidité.

A titre d'illustration d'adjuvants flexibilisants relevant de l'invention, on peut citer des copolymères du type du type éthylène-acétate de vinyle (EVA), éthylènepropylène-monomère diène (EPDM), caoutchouc éthylène-propylène (EPR) mais également du polypropylène atactique. Des mélanges de ces divers composés entre eux peuvent également convenir.

Alors qu'un module d'élasticité compris dans une plage de $2.10^{10}$ N/m$^2$ à $2.10^{11}$ N/m$^2$ convient pour la feuille supérieure, il est apparu qu'il convient de réduire ce module à une valeur dans une plage de l'ordre de $5.10^7$ N/m$^2$ à $2.10^8$ N/m$^2$ pour la feuille inférieure.

Ladite feuille inférieure comporte également une forte charge de matières inertes non polymériques, de préférence du carbonate de calcium. Cette charge contribue fortement à conférer au produit fini des caractéristiques avantageuses de comportement au feu.

L'adjonction d'agents ignifugeants bien connus notamment du type des dérivés d'antimoine ou autres est bien entendu particulièrement souhaitable. Un choix et un dosage convenables permettent notamment de répondre aux normes sévères de comportement au feu non seulement pour le dégagement de produits toxiques mais aussi pour les propriétés d'inflammabilité ou de résistance à la flamme.

La totalité des charges inertes et des adjuvants ignifugeants exprimée en pourcentage en poids par rapport aux constituants polymériques totaux de la couche inférieure peut être de l'ordre de 50 à 100%.

Les valeurs du module d'élasticité précitées se rapportent bien entendu à la feuille finie incluant les matières de charge et les matières ignifugeantes et éventuellement d'autres ingrédients avantageux.

Il est surprenant qu'il soit possible de "charger" d'une telle manière une feuille à base de polymères de propylène flexibilisée sans détériorer ses propriétés intrinsèques et sans porter atteinte aux caractéristiques du produit calandré final. En fait, la technique combine dans un produit fini, réalisé par calandrage, les propriétés d'une couche noble (feuille supérieure) avec celles d'une sous-couche suffisamment souple et inerte pour permettre l'enroulabilité et réduire les dangers de pollution en cas de combustion. Par la technique de l'invention, il est possible d'offrir au marché un produit adapté qui réduit fortement les risques en cas de combustion.

Ainsi qu'il a été indiqué ci-dessus, l'interposition entre la feuille supérieure et la feuille inférieure d'une couche intermédiaire pigmentée dans la masse est particulièrement intéressante afin de réaliser un fond coloré pour le motif décoratif imprimé sur le verso de la feuille supérieure, par exemple.

En principe, l'épaisseur de la couche supérieure et celle de la couche intermédiaire sont nettement plus réduites que celle de la couche inférieure. Ces deux premières couches contribuent essentiellement à l'aspect décoratif et à la résistance superficielle à l'usure et à la tache sans intervenir sur les autres propriétés physiques qui sont essentiellement assumées par la couche inférieure. La première couche (supérieure) peut par exemple être constituée par un film de 0,20 mm, la couche intermédiaire également par un film de 0,20 mm et la couche flexibilisée chargée inférieure peut avoir une épaisseur de l'ordre de 1,8 mm par exemple.

Aussi bien la couche supérieure que la couche intermédiaire peuvent comporter des agents ignifugeants, si on le souhaite. Du fait cependant que la masse polymérique inflammable (en dépit du taux de chargement élevé) est essentiellement constituée par la couche inférieure nettement plus épaisse que la ou les couches superposées, il suffit généralement de limiter la présence des agents ignifugeants à ladite couche inférieure, dans la mesure où celle-ci a été convenablement traitée.

Le produit de l'invention permet le recours à différentes techniques complémentaires classiques, notamment de finition. C'est ainsi que la surface externe de la feuille supérieure peut subir un grainage ou être revêtue d'un vernis de surface améliorant les propriétés d'usure ou de résistance à la lumière, etc.

L'invention sera décrite plus en détail ci-après en référence à une installation de production donnée à titre d'illustration.

## Brève description des dessins

- La figure 1 représente schématiquement la technique de production préalable des feuilles individuelles destinées à former le produit selon l'invention;
- La figure 2 représente schématiquement l'opération de doublage appliquée à des feuilles individuelles produites selon la figure 1.

## Description de formes d'exécution selon l'invention

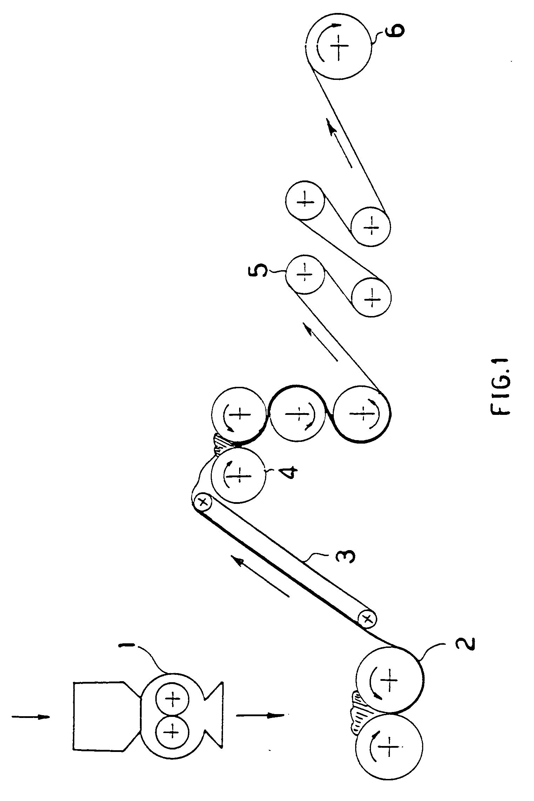

Dans la figure 1, on a représenté la réalisation des feuilles individuelles mises en oeuvre dans la technique de l'invention.

Une installation du type décrit à la figure 1 peut convenir pour l'obtention de trois feuilles différentes uti-

# EP 0 438 532 B1

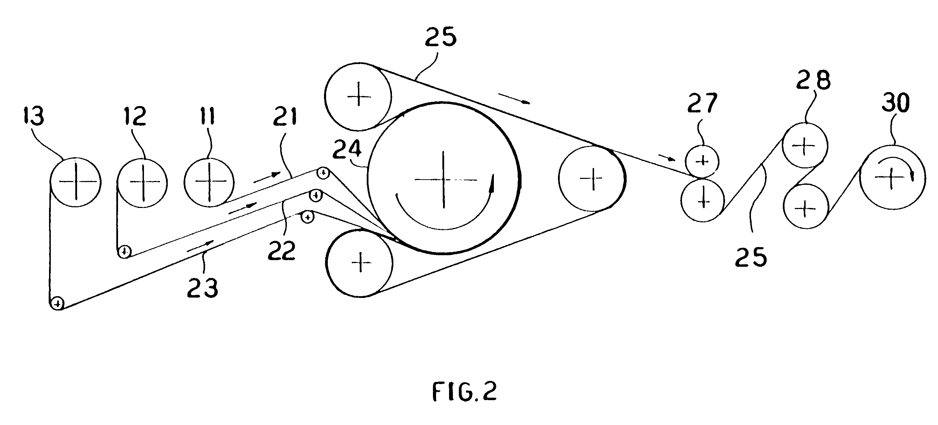

lisées ensuite dans l'installation décrite dans la figure 2.

Un mélangeur interne 1 du type de celui représenté à la figure 1, peut convenir pour réaliser aussi bien un film pigmenté destiné à la feuille supérieure, un film pigmenté destiné à réaliser la feuille intermédiaire ou un film chargé et flexibilisé servant à obtenir la feuille inférieure.

On travaille avantageusement pour réaliser le film transparent et le film intermédiaire dans le mélangeur interne à une température de 155 °C tandis qu'une température plus basse est maintenue, de l'ordre de 140 °C pour la feuille chargée et flexibilisée.

Ensuite, la matière est transférée vers un mélangeur externe 2 travaillant à 170 °C pour la feuille transparente et la feuille intermédiaire et à environ 150 °C pour la feuille chargée et assouplie.

Un transporteur 3 emmène ensuite la matière vers une installation de calandrage 4 qui permet de réaliser une feuille calandrée, à une température de 190 °C pour la feuille transparente et la feuille intermédiaire et à une température de 180 °C pour la feuille chargée assouplie. Des bobines de refroidissement 5 sont intercalées comme représenté et la matière est ensuite enroulée et stockée en 6.

Une bobine 11 fournit une feuille transparente 21, la bobine 12 fournit la feuille intermédiaire 22 et la bobine 13 fournit la feuille chargée et flexibilisée 23, les trois feuilles étant amenées à une combinante 24 travaillant à une température de 160 à 170 °C en vue de réaliser le produit calandré de l'invention. A la sortie de la combinante, une feuille composite 25 peut être amenée vers une installation de grainage 27 et ensuite la feuille 25 circule vers des cylindres de refroidissement 28 pour finalement être enroulée sur une bobine 30.

## Exemple

A titre d'exemple, on peut utiliser les compositions suivantes:

### 1. Feuille transparente (feuille supérieure)

| | |
|---|---|
| Copolymère de propylène (Eltex KL 001 P-Solvay | 100 |
| Stabilisant thermique (Irganox B215 - Ciba Geigy) | 0,2 |
| Lubrifiant (Harochem CGN - Harcros) | 0,1 |
| Stabilisant à la lumière (Chimasorb 944 LD-Ciba Geigy) | 0,2 |

### 2. Feuille intermédiaire

| | |
|---|---|
| Formule transparente | 100 |
| Pigment | 4 |

### 3. Feuille chargée et flexibilisée

| | A | B |
|---|---|---|
| Copolymère de polypropylène (Eltex KL 001 P-Solvay) | 100 | 100 |
| Stabilisant thermique (Irganox B215 Ciba Geigy) | 0,2 | 0,2 |
| Lubrifiant (Rhadiastar 1060 - Oleofina | 0,4 | 0,4 |
| Charge (carbonate de calcium) | 1400 | 1500 |
| Agent ignifugeant (Trihydrate d'aluminium | - | - |
| Ethylène-acétate de vinyle (Escorène 328 - Exxon) | 200 | 200 |
| Propylène atactique (Stamyroid APP - DSM) | 100 | - |
| EPDM (Dutral 36 FF - Montedison) | - | 200 |

On a également mesuré les modules d'élasticité des compositions A et B de la feuille chargée flexibilisée. Les mesures effectuées au viscoanalyseur METRAVIB ont donné les résultats suivants:

A: $2.10^8$ N/m$^2$

B: $5.10^7$ N/m$^2$.

Une partie des charges allant jusqu'à 50% peut être remplacée par un agent ignifugeant.

**Revendications**

1. Procédé d'obtention de revêtements de sols ou de murs caractérisé en ce qu'il comporte l'application d'au moins une feuille supérieure translucide ou transparente (21) sur une feuille inférieure (23) chargée et flexibilisée, un décor étant interposé entre lesdites feuilles et l'ensemble étant constitué d'une matière dans laquelle la quantité de constituants propyléniques présente dans le mélange de polymères et/ou dans le copolymère est supérieure à 50%.

2. Procédé selon la revendication 1 caractérisé en ce qu'on intercale entre la feuille supérieure (21) et inférieure (23) au moins une feuille intermédiaire (22) éventuellement pigmentée dans la masse et/ou pourvue d'un décor, dans laquelle la quantité de constituants propyléniques présente dans le mélange de polymères et/ou dans le copolymère est supérieure à 50%.

3. Procédé selon l'une quelconque des revendications précédentes caractérisée en ce que le décor est obtenu selon l'un au moins des procédés choisis parmi:
   - le grainage et/ou le gaufrage mécanique;
   - l'impression, de préférence l'impression sur la face interne de la feuille supérieure (21) et/ou sur la face interne de la feuille inférieure (23) et/ou éventuellement sur la feuille intermédiaire (22);
   - l'inclusion de matières solides;
   - le dépôt de poudres;
   - l'utilisation au moins localisée de matières moussables colorées ou non;
   - et d'autres procédés classiques connus en soi dans la technique de réalisation de revêtements de sols ou de murs.

4. Procédé selon l'une quelconque des revendications précédentes caractérisé en ce que les feuilles inférieure (23), intermédiaire (22) et supérieure (21) sont obtenues par calandrage ou par extrusion.

5. Procédé selon l'une quelconque des revendications précédentes caractérisé en ce que l'application de la feuille supérieure et éventuellement de la feuille intermédiaire s'effectue par les techniques de doublage ou de coextrusion.

6. Procédé selon l'une quelconque des revendications précédentes caractérisé en ce que les feuilles sont constituées de copolymères statistiques du propylène comportant des adjuvants habituels de stabilisation thermique et à la lumière ainsi que des agents de processabilité et éventuellement des agents ignifugeants.

7. Procédé selon l'une quelconque des revendications précédentes caractérisé en ce qu'on utilise comme adjuvants flexibilisants pour la feuille inférieure des copolymères du type éthylène-acétate de vinyle (EVA), éthylène-propylène-monomère diène (EPDM), caoutchouc éthylène-propylène (EPR) ou du polypropylène atactique ou encore des mélanges de ces composés entre eux.

8. Procédé selon la revendication 7 caractérisé en ce que la feuille inférieure présente un module d'élasticité compris dans une plage de $5.10^7$ N/m$^2$ à $2.10^8$ N/m$^2$.

9. Procédé selon l'une quelconque des revendications précédentes caractérisé en ce que la feuille inférieure comporte une forte charge de matières inertes non polymériques, de préférence du carbonate de calcium, de sorte que la totalité des charges inertes et des adjuvants ignifugeants, exprimée en pourcentage en poids par rapport aux constituants polymériques totaux de la couche inférieure peut être de l'ordre de 50 à 100%.

10. Procédé selon l'une quelconque des revendications précédentes caractérisé en ce que le produit subit un traitement complémentaire de finition, notamment un grainage au moins localisé de la surface externe de la feuille supérieure ou le dépôt au moins localisé d'un vernis de surface améliorant les propriétés d'usure ou de résistance à la lumière.

11. Revêtement de sols ou de murs comportant au moins une feuille supérieure translucide ou transparente (21), une feuille inférieure (23) chargée et flexibilisée et un décor interposé entre lesdites feuilles, l'ensemble étant constitué essentiellement d'une matière dans laquelle la quantité de constituants propyléniques présente dans le mélange de polymères et/ou dans le copolymère est supérieure à 50%.

12. Revêtement de sols ou de murs selon la revendication 11 caractérisé en ce qu'il comporte encore, entre les feuilles supérieure (21) et inférieure (23) une feuille intermédiaire (22) éventuellement pigmentée dans la masse et/ou éventuellement pourvue d'un décor, essentiellement dérivée également d'un polymère de propylène.

13. Revêtement de sols ou de murs selon la revendication 11 ou 12 caractérisé en ce que le décor est choisi parmi:
    - le grainage et/ou le gaufrage mécanique;
    - l'impression, de préférence l'impression sur la face interne de la feuille supérieure (21) et/ou sur la face interne de la feuille inférieure (23) et/ou éventuellement sur la feuille intermédiaire (22);
    - l'inclusion de matières solides appelées "cailloux";
    - le dépôt de poudres;
    - l'utilisation au moins localisée de matières moussables colorées ou non;
    - et autres procédés classiques connus en soi dans la technique de réalisation de revêtements de sols ou de murs.

14. Revêtement de sols ou de murs selon l'une quelconque des revendications 12 ou 13 caractérisé en ce que les feuilles sont constituées de copolymères statistiques de propylène comportant des adjuvants habituels de stabilisation thermique et à la lumière ainsi que des agents de processabilité et éventuellement des agents ignifugeants, obtenues par calandrage ou extrusion.

15. Revêtement de sols ou de murs selon l'une quelconque des revendications 12 à 14 caractérisé en ce que la feuille inférieure (23) contient à titre d'adjuvants flexibilisants des copolymères du type éthylène-acétate de vinyle (EVA), éthylène-propylène-monomère diène (EPDM), caoutchouc éthylène-propylène (EPR) ou du polypropylène atactique ou encore des mélanges de ces composés entre eux, et en ce qu'elle présente un module d'élasticité compris entre $5.10^7$ N/m$^2$ à $2.10^8$ N/m$^2$.

16. Revêtement de sols ou de murs selon l'une quelconque des revendications 12 à 15 caractérisé en ce que la feuille inférieure comporte une forte charge de matières inertes non polymériques, de préférence du carbonate de calcium et en ce que la totalité des charges inertes et des adjuvants ignifugeants, exprimée en pourcentage en poids par rapport aux constituants polymériques totaux de la couche inférieure peut être de l'ordre de 50 à 100%.

17. Revêtement de sols ou de murs selon l'une quelconque des revendications 11 à 16 caractérisé en ce qu'il présente une surface externe supérieure grainée au moins localement ou revêtue au moins localement d'un vernis de surface améliorant les propriétés d'usure ou de résistance à la lumière.


**Patentansprüche**

1. Verfahren zur Verwirklichung von Boden- oder Wändbelägen, dadurch gekennzeichnet, daß es die Aufbringung von mindestens einer durchscheinenden oder durchsichtigen, oberen Folie (21) auf einer gefüllten und flexibilisierten, unteren Folie (23) umfaßt, wobei zwischen diesen Folien eine Verzierung angeordnet ist, und das Ganze aus einem Material besteht, bei dem der Anteil an Propylenbestandteilen in dem Polymergemisch und/oder in dem Copolymer über 50% liegt.

2. Verfahren gemäß Anspruch 1, dadurch gekennzeichnet, daß zwischen der oberen Folie (21) und der unteren Folie (23) mindestens eine Zwischenfolie (22) angeordnet wird, die eventuell in der Masse pigmentiert ist und/oder mit einer Verzierung versehen ist, und bei der der Anteil an Propylenbestandteilen in dem Polymergemisch und/oder in dem Copolymer über 50% liegt.

3. Verfahren gemäß irgendeinem der vorhergehenden Ansprüche, dadurch gekennzeichnet, daß die Verzierung nach mindestens einem der folgenden Verfahren verwirklicht wird:
    - Grainieren und/oder mechanisches Gaufrieren;
    - Bedrucken, vorzugsweise Bedrucken der inneren Seite der oberen Folie (21) und/oder der inneren Seite der unteren Folie (23) und/oder eventuell der zwischenfolie (22);
    - Einschließen von festen Stoffen ;
    - Aufbringen von Pulvern;
    - Verwenden von gefärbten oder ungefärbten, schäumbaren Stoffen, zumindest örtlich;

- und weitere, an sich bekannte herkömmliche Verfahren zur Verwirklichung von Boden- oder Wandbelägen.

4. Verfahren gemäß irgendeinem der vorhergehenden Ansprüche, dadurch gekennzeichnet, daß die untere Folie (23), die mittlere Folie (22), und die obere Folie (21) durch Kalandrieren oder Extrudieren erhalten werden.

5. Verfahren gemäß irgendeinem der vorhergehenden Ansprüche, dadurch gekennzeichnet, daß die Aufbringung der oberen Folie, und eventuell der Zwischenfolie nach der Kaschier- oder Coextrusionstechnik erfolgt.

6. Verfahren gemäß irgendeinem der vorhergehenden Ansprüche, dadurch gekennzeichnet, daß die Folien aus statistischen Propylen-Copolymeren bestehen, die übliche Zusatzstoffe zur Wärme- und Lichtstabilisierung, sowie Verarbeitbarkeitsmittel und eventuell Flammwidrigkeitsmittel enthalten.

7. Verfahren gemäß irgendeinem der vorhergehenden Ansprüche, dadurch gekennzeichnet, daß als flexibilisierende Zusatzstoffe für die untere Folie Copolymere vom Typ Vinylethylenacetat (VEA), Ethylenpropylendienmonomer (EPDM) oder Ethylenpropylenkautschuk (EPR), oder ataktisches Polypropylen, oder auch Gemische dieser Verbindungen verwendet werden.

8. Verfahren gemäß Anspruch 7, dadurch gekennzeichnet, daß die untere Folie einen Elastizitätsmodul aufweist, der in dem Bereich von $5.10^7$ N/m² bis $2.10^8$ N/m² liegt.

9. Verfahren gemäß irgendeinem der vorhergehenden Ansprüche, dadurch gekennzeichnet, daß die untere Folie einen hohen Anteil an nicht-polymeren, inerten Füllstoffen, vorzugsweise Calciumcarbonat aufweist, so daß der gesamte Anteil der inerten Füllstoffe und feuerwidrigen Zusatzstoffe, ausgedrückt in Gewichtsprozenten der gesamten Polymerbestandteile der unteren Schicht, zwischen ungefähr 50 und 100% liegt.

10. Verfahren gemäß irgendeinem der vorhergehenden Ansprüche, dadurch gekennzeichnet, daß bei dem Produkt eine zusätzliche Endbehandlung vorgenommen wird, insbesondere eine zumindest örtliche Grainierung der äußeren Oberfläche der oberen Folie, oder eine zumindest örtliche Aufbringung eines Oberflächenlacks, der die Abnutzungs- oder Lichtbeständigkeitseigenschaften verbessert.

11. Boden- oder Wandbelag, der mindestens eine durchscheinende oder durchsichtige, obere Folie (21), eine gefüllte und flexibilisierte, untere Folie (23), und eine zwischen diesen Folien angeordnete Verzierung umfaßt, wobei das Ganze im wesentlichen aus einem Material besteht, bei dem der Anteil an Propylenbestandteilen in dem Polymergemisch und/oder in dem Copolymer über 50% liegt.

12. Boden- oder Wandbelag gemäß Anspruch 11, dadurch gekennzeichnet, daß er zwischen der oberen Folie (21) und der unteren Folie (23) außerdem eine Zwischenfolie (22) aufweist, die eventuell in der Masse pigmentiert ist und/oder eventuell mit einer Verzierung versehen ist, und die im wesentlichen ebenfalls von einem Propylenpolymer abgeleitet ist.

13. Boden- oder Wandbelag gemäß Anspruch 11 oder 12, dadurch gekennzeichnet, daß die Verzierung nach mindestens einem der folgenden Verfahren verwirklicht wird:
    - Grainieren und/oder mechanisches Gaufrieren;
    - Bedrucken, vorzugsweise Bedrucken der inneren Seite der oberen Folie (21) und/oder der inneren Seite der unteren Folie (23) und/oder eventuell der Zwischenfolie (22);
    - Einschließen von festen Stoffen;
    - Aufbringen von Pulvern;
    - Verwenden von gefärbten oder ungefärbten, schäumbaren Stoffen, zumindest örtlich;
    - und weitere, an sich bekannte herkömmliche Verfahren zur Verwirklichung von Boden- oder Wandbelägen.

14. Boden- oder Wandbelag gemäß irgendeinem der Ansprüche 12 oder 13, dadurch gekennzeichnet, daß die Folien aus statistischen Propylen-Copolymeren bestehen, die übliche Zusatzstoffe zur Wärme- und Lichtstabilisierung, sowie Verarbeitbarkeitsmittel und eventuell Flammwidrigkeitsmittel enthalten, und durch Kalandrieren oder Extrudieren erhalten werden.

15. Boden- oder Wandbelag gemäß irgendeinem der Ansprüche 12 bis 14, dadurch gekennzeichnet, daß die untere Folie (23) als flexibilisierende Zusatzstoffe Copolymere vom Typ Vinylethylenacetat (VEA), Ethylenpropylendienmonomer (EPDM) oder Ethylenpropylenkautschuk (EPR), oder ataktisches Polypropylen, oder auch Gemische dieser Verbindungen enthält, und daß sie einen Elastizitätsmodul aufweist, der zwischen $5.10^7$ N/m$^2$ und $2.10^8$ N/m$^2$ liegt.

16. Boden- oder Wandbelag gemäß irgendeinem der Ansprüche 12 bis 15, dadurch gekennzeichnet, daß die untere Folie einen hohen Anteil an nicht-polymeren, inerten Füllstoffen, vorzugsweise Calciumcarbonat aufweist, so daß der gesamte Anteil der inerten Füllstoffe und feuerwidrigen Zusatzstoffe, ausgedrückt in Gewichtsprozenten der gesamten Polymerbestandteile der unteren Schicht, zwischen ungefähr 50 und 100% liegt.

17. Boden- oder Wandbelag gemäß irgendeinem der Ansprüche 11 bis 16, dadurch gekennzeichnet, daß er eine obere, äußere Oberfläche aufweist, die zumindest örtlich grainiert ist, oder zumindest örtlich mit einem Oberflächenlack überzogen ist, der die Abnutzungs- oder Lichtbeständigkeitseigenschaften verbessert.

## Claims

1. Process for obtaining floor or wall coverings, characterized in that it comprises the application of at least one upper translucid or transparent sheet (21) onto a filled and flexilized lower sheet (23), a decoration being interposed between the said sheets and the whole consisting of a material in which the quantity of propylene-derived constituents in the mixture of polymers and/or in the copolymer is greater than 50 %.

2. Process according to claim 1, characterized in that between the upper (21) and lower (23) sheet there is interleaved at least one intermediate sheet (22) which is optionally bulk-pigmented and/or provided with a decoration,in which the quantity or propylene-derived constituents in the mixture of polymers and/or in the copolymer is greater than 50 %.

3. Process according to either of the preceding claims, characterized in that the decoration is obtained according to at least one of the processes chosen from :
   - mechanical graining and/or embossing;
   - printing, preferably printing on the inner face of the upper sheet (21) and/or on the inner face of the lower sheet (23) and/or optionally on the intermediate sheet (22);
   - the inclusion of solid matter;
   - the deposition of powders;
   - at least localized use of formable substances, colored or otherwise;
   - and other conventional processes which are known per se in the technique of producing floor or wall coverings.

4. Process according to any one of the preceding claims, characterized in that the lower (23), intermediate (22) and upper (21) sheets are obtained by calendering or by extrusion.

5. Process according to any one of the preceding claims, characterized in that the application of the upper sheet and optionally of the intermediate sheet is performed by lining or coextrusion techniques.

6. Process according to any one of the preceding claims, characterized in that the sheets consist of random propylene copolymers containing usual heat and light stabilizer adjuvants and processing agents and optionally flame-retardant agents.

7. Process according to any one of the preceding claims, characterized in that copolymers of the EVA, EPDM or EPR type or atactic polypropylene or else mixtures of these compounds with each other are employed as flexibilized adjuvants for the lower sheet.

8. Process according to claim 7, characterized in that the lower sheet has an elasticity modulus included in a range from $5 \times 10^7$ N/m$^2$ to $2 \times 10^8$ N/m$^2$.

9. Process according to any one of the preceding claims, characterized in that the lower sheet comprises a high proportion of nonpolymeric inert matter, preferably calcium carbonate, so that the combined total of the inert fillers and of the flame-retardant adjuvants, expressed as a weight percentage relative to the total polymeric constituents of the lower layer, is of the order of 50 to 100 %.

10. Process according to any one of the preceding claims, characterized in that the product is subjected to a complementary finishing treatment, especially an at least localized graining of the external surface of the upper sheet or at least localized deposition of a surface varnish improving the wear- or light-resistance properties.

11. Floor or wall covering comprising at least an upper translucid or transparent sheet (21), a filled and flexibilized lower sheet (23) and a decoration interposed between the said sheets, the whole consisting essentially of a material in which the quantity of propylene-derived constituents in the mixture of polymers and/or in the copolymer is greater than 50 %.

12. Floor or wall covering according to claim 11, characterized in that it also comprises, between the upper (21) and lower (23) sheets an intermediate sheet (22) which is optionally bulk-pigmented and/or optionally provided with a decoration and essentially also derived from a propylene polymer.

13. Floor or wall covering according to claim 11 or 12, characterized in that the decoration is chosen from :
    - mechanical graining and/or embossing;
    - printing, preferably printing on the inner face of the upper sheet (21) and/or on the inner face of the lower sheet (23) and/or optionally on the intermediate sheet (22);
    - the inclusion of solid matter called "pebbles";
    - the deposition of powders;
    - at least localized use of foamable substances, colored or otherwise;
    - and other conventional processes which are known per se in the technique of producing floor or wall coverings.

14. Floor or wall covering according to any one of claims 12 or 13, characterized in that the sheets consist of random propylene copolymers containing usual heat and light stabilizer adjuvants and processing agents and optionally flame-retardant agents, obtained by calendering or by extrusion.

15. Floor or wall covering according to any one of claims 12 to 14, characterized in that the lower sheet (23) contains, by way of flexibilized adjuvants, copolymers of the EVA, EPDM or EPR type or atactic polypropylene or else mixtures of these compounds with each other, and in that it has an elasticity modulus included between $5 \times 10^7$ N/m$^2$ to $2 \times 10^8$ N/m$^2$.

16. Floor or wall covering according to any one of claims 12 to 15, characterized in that the lower sheet comprises a high proportion of nonpolymeric inert matter, preferably calcium carbonate and in that the combined total of the inert fillers and of the flame-retardant adjuvants, expressed as a weight percentage relative to the total polymeric constituents of the lower layer, may be of the order of 50 to 100 %.

17. Floor or wall covering according to any one of claims 11 to 16, characterized in that it has an upper external surface which is at least locally grained or at least locally coated with a surface varnish improving the wear or light resistance properties.

FIG.1

FIG.2

EP 0 438 532 B1